# FASCICULE DE BREVET EUROPEEN

(11) **EP 0 898 063 B1**
(45) Date de publication et mention de la délivrance du brevet: **10.12.2003**
(21) Numéro de dépôt: 98402072.7
(22) Date de dépôt: 17.08.1998
(51) Int. Cl.: F02C 7/045, F04D 29/66

(54) **Ensemble réducteur de bruit pour turboréacteur d'aéronef**
Geräuschdämpfungseinrichtung für ein Mantelstromtriebwerk
Noise reducing attachment for a turbofan engine

(30) Priorité: 19.08.1997 FR 9710481
(43) Date de publication de la demande: 24.02.1999
(60) Demande divisionnaire: 03100539.0
(73) Titulaire: AIRBUS France, 31060 Toulouse Cedex 03 (FR)
(72) Inventeur: Porte, Alain, 31770 Colomiers (FR); Andre, Robert, 31320 Auzeville (FR)
(74) Mandataire: Poulin, Gérard

(56) Documents cités:
- EP-A- 0 352 993
- GB-A- 2 010 434
- GB-A- 2 065 766
- GB-A- 2 273 131

## Description

### Domaine technique

L'invention concerne un ensemble réducteur de bruit pour un turboréacteur d'aéronef. Cet ensemble comprend une structure d'entrée d'air, un carter de soufflante et une pièce annulaire assurant le raccordement de la structure d'entrée d'air sur le carter de soufflante.

Un tel ensemble réducteur de bruit peut être implanté sur tous les turboréacteurs incluant une soufflante placée à l'intérieur d'une nacelle entourant le moteur.

### Etat de la technique

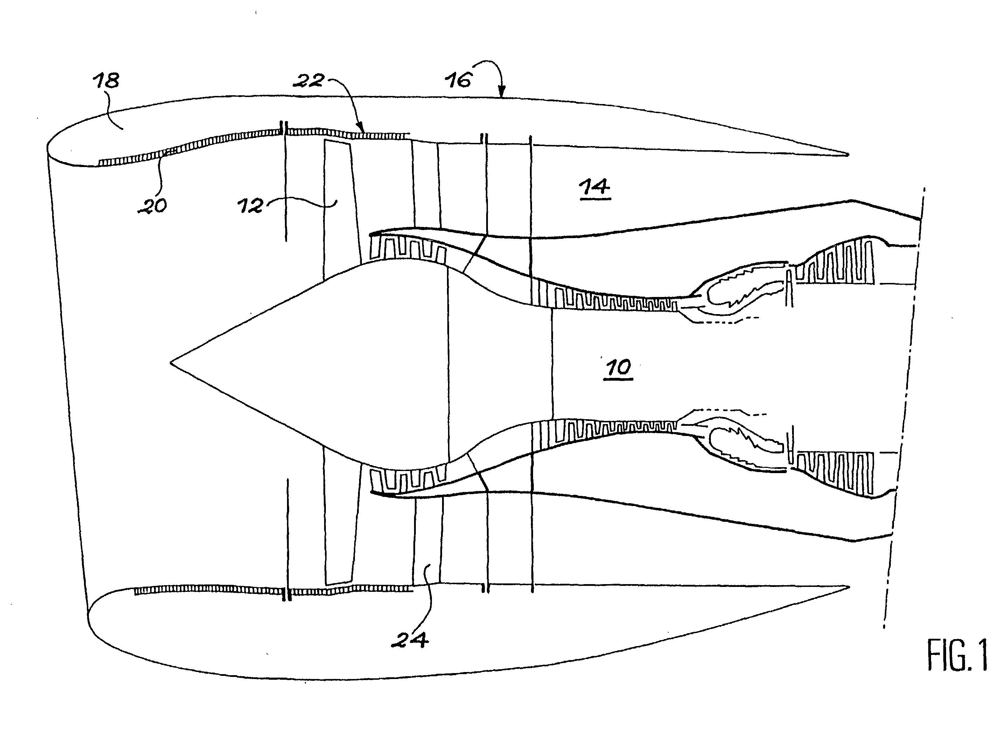

Sur la figure 1 des dessins annexés, on a représenté très schématiquement un turboréacteur à double flux de conception classique. Un tel turboréacteur comprend un moteur central 10, centré sur un axe longitudinal et dont l'extrémité prévue pour être orientée vers l'avant est située sur la gauche de la figure. A partir de cette extrémité avant, le moteur central 10 comporte de façon connue un compresseur, une turbine haute pression entraînant le compresseur, une chambre de combustion et une turbine basse pression. La turbine basse pression entraîne à son tour une soufflante 12 placée à l'avant du moteur central 10. Plus précisément, les pales de la soufflante 12 sont situées dans un canal annulaire 14, appelé "canal de soufflante", délimité entre l'enveloppe extérieure du moteur central 10 et l'enveloppe intérieure d'une nacelle 16, disposée coaxialement autour du moteur central 10.

La partie avant de la nacelle 16 forme une structure d'entrée d'air 18 dont le bord d'attaque est caréné. A son extrémité arrière, la paroi intérieure 20 de la structure d'entrée d'air 18 est habituellement fixée à l'extrémité avant d'un carter de soufflante 22. Ce carter de soufflante 22 est disposé autour de la soufflante 12 et il est relié rigidement à la structure du moteur central 10 par au moins un jeu de bras 24 orientés radialement. Cette liaison mécanique rigide entre le carter de soufflante 22 et la structure du moteur central 10 permet de maîtriser au mieux le jeu existant entre ce carter et les extrémités des pales de la soufflante 12.

Dans les turboréacteurs développés ces dernières années, la réduction du bruit constitue l'un des objectifs prioritaires. A cet effet, il est de pratique courante de réaliser la majeure partie de la paroi intérieure de la nacelle 16 sous la forme d'une structure alvéolaire de réduction de bruit. Comme on l'a représenté très schématiquement sur la figure 1, la paroi intérieure 20 de la structure d'entrée d'air 18 ainsi que le carter de soufflante 22 présentent habituellement, au moins en partie, une telle structure alvéolaire.

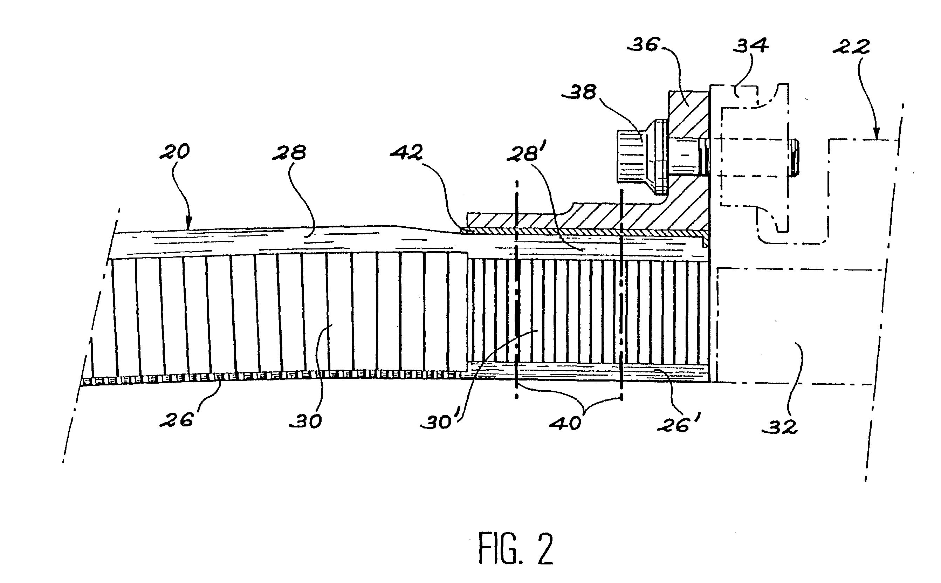

Sur la figure 2 des dessins annexés, on a représenté plus en détail la zone de jonction de l'extrémité arrière de la paroi intérieure 20 sur l'extrémité avant du carter de soufflante 22, dans un turboréacteur de l'art antérieur.

En dehors de la zone dans laquelle s'effectue la jonction, la paroi intérieure 20 de la structure d'entrée d'air présente une structure alvéolaire de réduction de bruit. Cette structure, de type sandwich, se compose d'une peau interne 26 perméable à l'air, d'une peau externe 28, imperméable à l'air, et d'une âme alvéolaire 30 interposée entre les peaux. La peau interne 26 est réalisée par exemple sous la forme d'une tôle perforée ou d'un tissu ajouré en un matériau tel que du carbone ou un métal. La peau externe 28 est généralement une structure composite multicouche qui fait office de réflecteur acoustique et assure la transmission principale des efforts. Enfin, l'âme alvéolaire 30 est généralement de type nid d'abeilles et formée d'alvéoles de grandes dimensions.

Le carter de soufflante 22 est généralement une pièce métallique. Comme on l'a illustré de façon très schématique sur la figure 2, cette pièce est de préférence évidée, au moins sur une partie de sa longueur, afin qu'une structure 32 de réduction de bruit équipe sa surface intérieure. Cette structure 32 est alors formée principalement d'une structure alvéolaire, revêtue d'une peau interne perméable à l'air sur sa face tournée vers le canal de soufflante 14.

Afin de permettre l'assemblage de la structure d'entrée d'air 18 et du carter de soufflante 22, ce dernier est équipé, à son extrémité avant, d'une bride extérieure annulaire 34. L'assemblage est assuré par une pièce annulaire de raccordement 36, à section en forme de L, montée autour de l'extrémité arrière de la paroi intérieure 20 et fixée à la bride 34 par des boulons 38 circonférentiellement répartis.

Dans les turboréacteurs de l'art antérieur, la liaison entre la pièce annulaire de raccordement 36 et la paroi intérieure 20 de la structure d'entrée d'air est assurée par des organes de fixation tels que des vis fraisées ou des rivets (illustrés schématiquement par des traits mixtes 40 sur la figure 2), qui traversent sur toute son épaisseur l'extrémité arrière de la paroi intérieure 20.

Pour tenir compte du fait que la majeure partie des efforts transmis entre le moteur central 10 et la structure d'entrée d'air 18 transite par cette jonction, la structure de la partie arrière de la paroi intérieure 20 est modifiée dans cette zone de façon à être renforcée.

Ainsi, comme l'illustre la figure 2 la partie arrière de la paroi intérieure 20, sur laquelle est fixée la pièce annulaire de raccordement 36, présente une peau interne 26' renforcée et imperméable à l'air, une peau externe 28' également renforcée, ainsi qu'une âme alvéolaire 30' renforcée, en général métallique (aluminium) et très densifiée, formée d'alvéoles de dimension réduite, souvent remplies de résine en vue de résister aux efforts d'écrasement des organes de fixation 40.

La technique utilisée actuellement pour effectuer la jonction entre la structure d'entrée d'air et le carter de soufflante a pour première conséquence une perte totale de l'effet de réduction de bruit dans la zone d'éclissage.

Cette technique se traduit également par une augmentation de la masse dans la zone de jonction, par des risques de corrosion de l'âme alvéolaire métallique, par des difficultés de fabrication (cintrage d'alvéoles de petite dimension, usinage en forme de l'âme alvéolaire), par des difficultés de pose des organes de fixation au travers de l'âme alvéolaire 30' et par des risques d'affaissement de la partie arrière de la paroi 20 sous charge, à l'emplacement des organes de fixation.

Enfin, du fait que la paroi intérieure 20 est généralement fabriquée par drapages successifs sur un mandrin présentant la forme intérieure de la structure d'entrée d'air, ses dimensions extérieures sont peu précises. Avant de fixer la pièce annulaire de raccordement 36 sur l'extrémité arrière de la paroi 20, il est donc nécessaire d'effectuer une reprise d'usinage de cette surface extérieure et d'interposer une cale annulaire 42.

Le document GB-A-2 273 131 décrit une structure d'entrée d'air de moteur d'aéronef, dans laquelle le carter de soufflante intègre une structure annulaire en nid d'abeilles. A son extrémité avant, le carter de soufflante comprend une bride servant à la fixation d'un renfort interne à la nacelle et un prolongement vers l'avant servant à la fixation de l'entrée d'air.

### Exposé de l'invention

L'invention a principalement pour objet un ensemble réducteur de bruit incluant une structure d'entrée d'air et un carter de soufflante d'un turboréacteur d'aéronef, cet ensemble permettant de réduire également le bruit dans la zone de jonction, tout en réduisant la masse par rapport aux techniques actuelles.

L'ensemble réducteur de bruit conforme à l'invention a aussi pour objectif de faciliter la fabrication et l'assemblage, tout en supprimant les risques d'affaissement de la paroi intérieure de la structure d'entrée d'air sous charge, à l'emplacement des organes de fixation.

Conformément à l'invention, ce résultat est obtenu au moyen d'un ensemble réducteur de bruit, pour turboréacteur, cet ensemble comprenant une structure d'entrée d'air, munie d'une paroi intérieure incluant une peau interne perméable, une peau externe imperméable et une âme alvéolaire ; un carter de soufflante pourvu d'une bride extérieure annulaire à son extrémité avant et équipé intérieurement d'une première structure alvéolaire de réduction de bruit ; et une pièce annulaire de raccordement fixée à la bride et à une partie arrière de la paroi intérieure ; caractérisé par le fait que la partie arrière de la paroi intérieure, à laquelle est fixée la pièce annulaire de raccordement, est dépourvue d'âme alvéolaire et située sensiblement dans le prolongement de la peau externe, et par le fait qu'une deuxième structure alvéolaire de réduction de bruit est rapportée à l'intérieur de la partie arrière de la paroi intérieure.

Dans une forme de réalisation préférée de l'invention, la partie arrière de la paroi intérieure comprend des prolongements vers l'arrière de la peau interne et de la peau externe, appliqués l'un contre l'autre.

De préférence, la pièce de raccordement présente une section en forme de L, dont les branches sont fixées respectivement à la bride et à la partie arrière de la paroi intérieure.

Dans une première forme de réalisation de l'invention, l'une des branches de la pièce de raccordement est fixée à l'intérieur de la partie arrière de la paroi intérieure. Cette forme de réalisation présente l'avantage de ne pas nécessiter de reprise d'usinage. En effet, la forme et les dimensions de la surface intérieure de la paroi intérieure de la structure d'entrée d'air sont définies avec précision lors de la fabrication de celle-ci par drapages successifs.

Dans cette première forme de réalisation de l'invention, la pièce de raccordement peut comporter une partie avant qui s'étend radialement vers l'intérieur le long d'une face avant de l'âme alvéolaire.

Dans une deuxième forme de réalisation de l'invention, l'une des branches de la pièce de raccordement est fixée à l'extérieur de la partie arrière de la paroi intérieure. On doit alors effectuer une reprise d'usinage afin d'effectuer un ajustement précis de la pièce de raccordement sur la partie arrière de la paroi intérieure.

L'invention couvre également deux modes de réalisation différents de la deuxième structure alvéolaire, placée dans la zone de jonction.

Dans un premier mode de réalisation, la deuxième structure alvéolaire de réduction de bruit est constituée par un prolongement vers l'avant de la première structure alvéolaire de réduction de bruit. Cet agencement a pour avantage de ne pas modifier le carter de soufflante.

Dans un deuxième mode de l'invention, la deuxième structure alvéolaire de réduction de bruit est séparée de la première structure alvéolaire de réduction de bruit.

Dans le premier mode de réalisation de réalisation, le prolongement vers l'avant de la structure alvéolaire peut être placé soit à l'intérieur d'un prolongement vers l'avant du carter de soufflante, soit à l'intérieur d'une pièce rapportée, fixée sur le prolongement de la structure alvéolaire.

Dans le premier et le deuxième modes de réalisation, une pièce rapportée comportant une partie plane fixée entre la bride et la pièce de raccordement, peut aussi entourer la deuxième structure alvéolaire de réduction de bruit.

Dans la première forme de réalisation de l'invention, la pièce de raccordement peut être centrée sur le prolongement vers l'avant de la structure d'entrée d'air lorsque ce prolongement existe.

Dans la deuxième forme de réalisation de l'invention, la partie arrière de la paroi intérieure de la structure d'entrée d'air peut être centrée soit sur le prolongement vers l'avant du carter de soufflante lorsque ce prolongement existe, soit sur la pièce rapportée lorsque celle-ci est fixée entre la bride et l'autre branche de la pièce de raccordement.

Dans le premier mode de réalisation de l'invention et lorsqu'on utilise une pièce rapportée fixée directement sur le prolongement de la structure alvéolaire, la pièce de raccordement peut porter des parties de centrage et de guidage placées autour de la bride. Selon le cas, les parties de centrage et de guidage peuvent faire partie intégrante de la pièce de raccordement ou, au contraire, être fixées sur cette pièce par des moyens de fixation différents de ceux qui assurent la fixation de la pièce de raccordement sur la bride du carter de soufflante.

Selon le cas, la surface de jonction qui sépare la deuxième structure alvéolaire de la paroi intérieure attenante à la partie arrière peut être soit orientée radialement, soit inclinée vers l'arrière en allant vers l'extérieur.

Dans le premier mode de réalisation de l'invention, lorsqu'une pièce rapportée entoure la deuxième structure alvéolaire de réduction de bruit et comporte une partie plane fixée entre la bride et la pièce de raccordement, les moyens de fixation de la partie plane peuvent être les mêmes que ceux qui relient la bride à la pièce de raccordement ou au contraire, des moyens différents de ces derniers moyens de fixation.

Dans le deuxième mode de réalisation de l'invention, lorsqu'une pièce rapportée entoure la deuxième structure alvéolaire de réduction de bruit et comporte une partie plane fixée entre la bride et la pièce de raccordement, les moyens de fixation de la partie plane sont, de préférence, différents de ceux qui relient la pièce de raccordement et la bride. Avantageusement, la deuxième structure alvéolaire est alors fixée sur la pièce rapportée.

Lorsque le deuxième mode de réalisation de l'invention et la deuxième forme de réalisation de l'invention sont combinés, la deuxième structure alvéolaire est, de préférence, fixée directement à l'intérieur de la partie arrière de la paroi intérieure de la structure d'entrée d'air.

Au contraire, lorsque le deuxième mode de réalisation de l'invention est combiné avec la première forme de réalisation de l'invention, la deuxième structure alvéolaire est, de préférence, fixée à l'intérieur de la pièce de raccordement.

Dans ce dernier cas, la deuxième structure alvéolaire comporte avantageusement au moins une zone à résistance renforcée, que traversent des moyens de fixation démontables reliant ladite deuxième structure alvéolaire à la pièce de raccordement et reliant cette dernière pièce à la partie arrière de la paroi intérieure.

Toujours dans ce dernier cas, des moyens d'étanchéité aérodynamique sont, de préférence, interposés entre la paroi intérieure de la structure d'entrée d'air et la deuxième structure alvéolaire, au niveau d'une face intérieure de celle-ci.

### Brève description des dessins

On décrira à présent, à titre d'exemples non limitatifs, différents modes et formes de réalisation de l'invention, en se référant aux dessins annexés, dans lesquels :
- la figure 1, déjà décrite, représente schématiquement, en coupe longitudinale, un turboréacteur à double flux de l'art antérieur ;
- la figure 2, déjà décrite, illustre à plus grande échelle la zone de jonction de l'art antérieur entre la structure d'entrée d'air et le carter de soufflante du turboréacteur de la figure 1 ;
- la figure 3 est une vue en coupe comparable à la figure 2, qui représente un premier mode de réalisation de l'invention, combiné à une première forme de réalisation de la zone de jonction entre la structure d'entrée d'air et le carter de soufflante d'un turboréacteur conforme à l'invention ;
- les figures 4 à 7 sont des vues en coupe comparables à la figure 3, qui représentent des variantes de la première forme de réalisation de la zone de jonction, combinées au premier mode de réalisation de l'invention ;
- la figure 8 est une vue en coupe comparable à la figure 3, illustrant le premier mode de réalisation de l'invention, combiné à une deuxième forme de réalisation de la zone de jonction ;
- les figures 9 et 10 sont des vues en coupe comparables à la figure 8, illustrant deux variantes de la deuxième forme de réalisation de la zone de jonction, combinées au premier mode de réalisation de l'invention ;
- la figure 11 est une vue en coupe comparable à la figure 3, illustrant un deuxième mode de réalisation de l'invention, combiné à la première forme de réalisation de la zone de jonction ;
- la figure 12 est une vue en coupe comparable à la figure 11, qui représente une variante du deuxième mode de réalisation de l'invention, combinée à la première forme de réalisation de la zone de jonction ;
- la figure 13 est une vue en coupe comparable à la figure 11, qui représente le deuxième mode de réalisation de l'invention, combiné à la deuxième forme de réalisation de la zone de jonction ; et
- la figure 14 est une vue en coupe comparable à la figure 13, qui représente une variante du deuxième mode de réalisation de l'invention, combinée à la deuxième forme de réalisation de la zone de jonction.

### Description détaillée de formes et modes de réalisation préférés

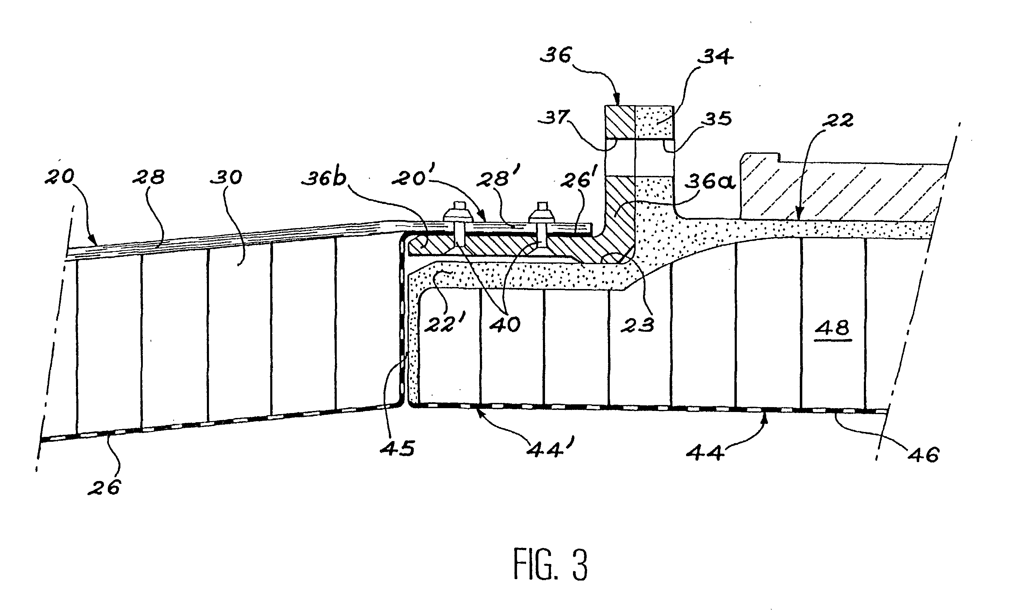

Les figures 3 à 14 représentent, de façon non limitative, différentes réalisations possibles de l'invention. Plus précisément, ces figures montrent la zone de jonction entre l'extrémité arrière de la paroi intérieure 20 d'une structure d'entrée d'air et l'extrémité avant d'un carter de soufflante 22, dans un turboréacteur tel que celui que l'on a décrit précédemment en se référant à la figure 1.

De façon classique, en avant de la zone de jonction, la paroi intérieure 20 de la structure d'entrée d'air se présente sous la forme d'une structure sandwich incluant une peau interne 26 perméable à l'air, une peau externe 28 imperméable à l'air et une âme alvéolaire 30 interposée entre ces deux peaux. Cette structure étant identique à celles que l'on trouve dans les turboréacteurs existants, elle ne sera pas décrite plus en détail.

Conformément à l'invention, la partie arrière 20' de la paroi intérieure 20, utilisée afin d'assurer la jonction de cette paroi avec le carter de soufflante 22, est dépourvue d'âme alvéolaire. De plus, cette partie arrière 20' de la paroi intérieure 20 est située sensiblement dans le prolongement de la peau externe 28. Elle comprend des prolongements vers l'arrière 26' et 28', respectivement de la peau interne 26 et de la peau externe 28. Ces prolongements 26' et 28' sont appliqués l'un contre l'autre, après que la peau interne 26 ait cheminé le long de la face arrière de l'âme alvéolaire 30, comme l'illustrent les figures 3 à 14.

Du fait que la partie arrière 20' de la paroi intérieure 20 est dépourvue d'âme alvéolaire 30 et située dans le prolongement de la peau externe 28, un espace annulaire est libéré à l'intérieur de la partie arrière 20', entre cette partie arrière et le canal de soufflante. Cet espace annulaire est utilisé pour loger une structure alvéolaire 44' de réduction de bruit.

La structure alvéolaire 44' de réduction de bruit assure la continuité entre une structure alvéolaire 44 de réduction de bruit, qui équipe intérieurement le carter de soufflante 22, et la paroi intérieure 20 de la structure d'entrée d'air 18.

Dans un premier mode de réalisation de l'invention, illustré sur les figures 3 à 10, la structure alvéolaire 44' logée à l'intérieur de la partie arrière 20' de la paroi intérieure 20 est réalisée d'un seul tenant avec la structure alvéolaire 44 du carter de soufflante 22, dont elle constitue un prolongement vers l'avant.

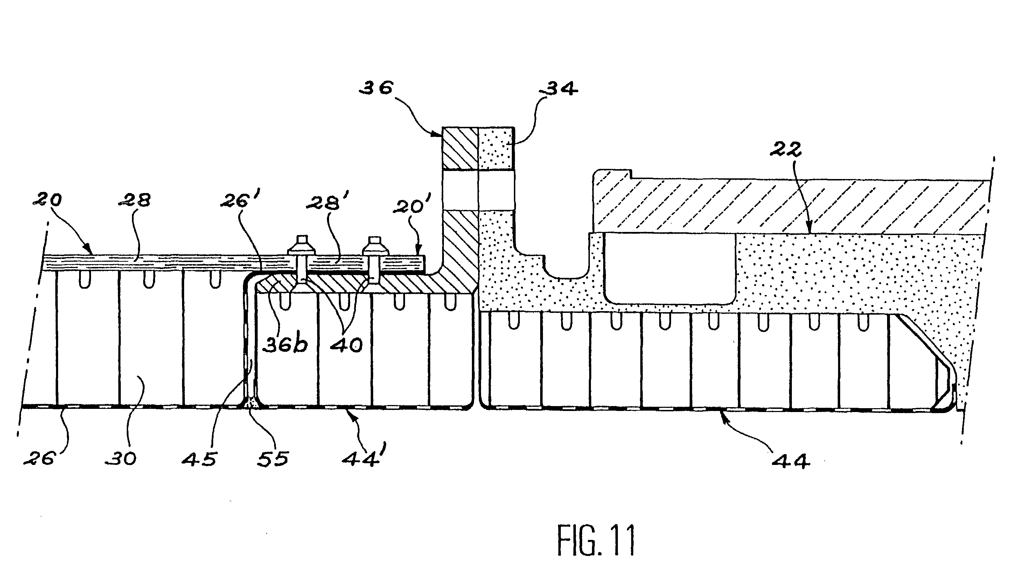

Dans un deuxième mode de réalisation de l'invention, illustré sur les figures 11 à 14, la structure alvéolaire 44' forme une pièce distincte, séparée de la structure alvéolaire 44 qui équipe le carter de soufflante.

Conformément à l'invention, la paroi intérieure de la nacelle du turboréacteur se trouve ainsi équipée de structures alvéolaires de réduction de bruit, pratiquement sans discontinuité, dans la zone de jonction entre la structure d'entrée d'air et le carter de soufflante, d'où une amélioration des performances acoustiques.

La présente invention se traduit également par un gain de masse important, par la suppression du risque de corrosion et par une protection au feu de la pièce 36b (dans la première forme de réalisation de la zone de jonction, illustrée sur les figures 3 à 8, 11 et 12).

De plus, du fait de la nature monolithique de la partie arrière de la paroi intérieure fixée sur la pièce annulaire de raccordement, les réparations sont simplifiées. Considérant également que cette partie n'est pas exposée à l'écoulement aérodynamique, les fixations utilisées peuvent être à "empreinte", et donc aisément démontables. Tout cela réduit les coûts d'exploitation.

Comme dans les jonctions de l'art antérieur, la liaison entre la paroi intérieure 20 et le carter de soufflante 22 est assurée par une pièce annulaire de raccordement 36, à section en forme de L. Une première branche 36a de cette pièce 36, constituant une bride circulaire, est fixée à la bride extérieure annulaire 34 prévue à l'extrémité avant du carter de soufflante 22. Cette fixation est assurée par des boulons (non représentés) traversant des trous en vis-à-vis 35 et 37, formés respectivement dans la bride 34 et dans la première branche 36a de la pièce 36.

La deuxième branche 36b de la pièce de raccordement 36 forme un cylindre qui est reçu à l'intérieur de la partie arrière 20' de la paroi intérieure 20, dans la première forme de réalisation de la zone de jonction illustrée sur les figures 3 à 8 (premier mode de réalisation) et 11 et 12 (deuxième mode de réalisation).

La fixation de la partie arrière 20' de la paroi intérieure 20 sur cette deuxième branche 36b de la pièce de raccordement 36 est assurée par des organes de fixation 40 tels que des vis fraisées ou des rivets. Etant donné que la partie arrière 20' de la paroi 20 est dépourvue d'âme alvéolaire, la fixation est réalisée sans difficulté particulière et sans risque d'affaissement sous charge. De plus, du fait que la majeure partie des efforts est transmise au travers de la peau externe 28, la transmission des efforts s'effectue de façon aussi efficace que dans les structures de l'art antérieur.

Dans la première forme de réalisation de l'invention, du fait que la deuxième branche 36b de la pièce de raccordement 36 est placée à l'intérieur de la partie arrière 20' de la paroi intérieure 20, aucune reprise d'usinage n'est nécessaire lors de l'assemblage. En effet, la surface intérieure de la paroi 20 présente une forme et des dimensions parfaitement maîtrisées, puisque la fabrication de cette paroi par drapage s'effectue en commençant par le drapage de la peau interne 26 sur un mandrin de dimensions et de forme connues.

L'absence d'âme alvéolaire renforcée, en général métallique et très densifiée, permet également de faciliter la fabrication de la paroi intérieure 20, notamment en évitant la difficulté d'usinage en forme d'une structure en nid d'abeilles de forte densité et le cintrage des différentes couches sur le mandrin utilisé lors du drapage.

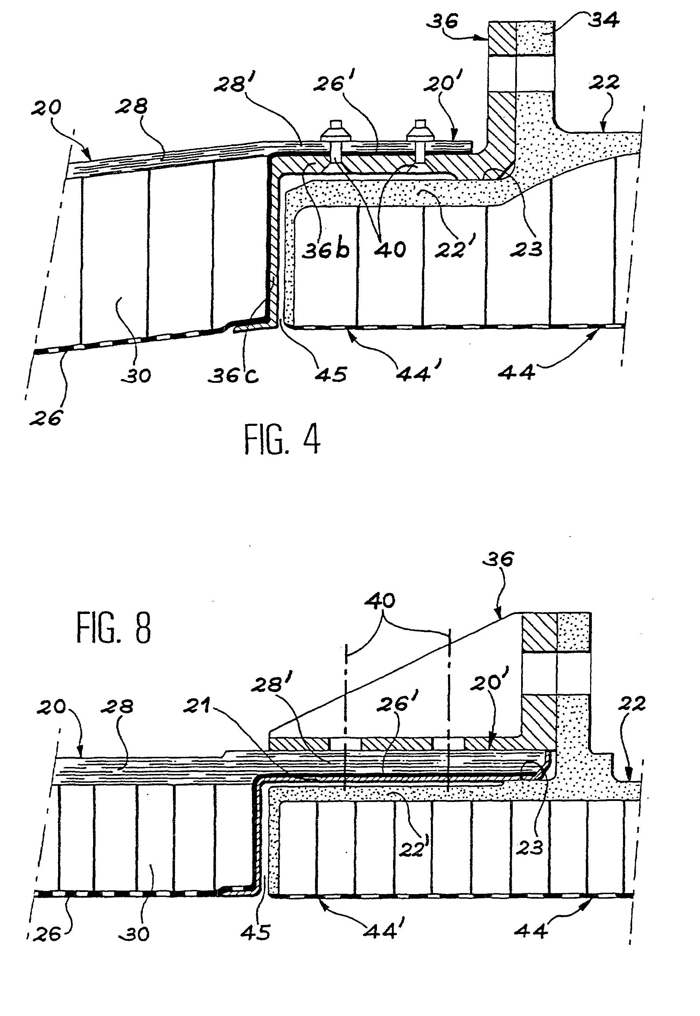

Sur les figures 3 et 4, le carter de soufflante 22 présente un prolongement vers l'avant 22' au-delà de la bride 34. Ce prolongement 22' s'étend jusqu'en vis-à-vis de la face arrière de l'âme alvéolaire 30, dans l'espace annulaire ménagé à l'intérieur de la partie arrière 20' de la paroi 20. Le prolongement vers l'avant 44' de la structure alvéolaire 44 de réduction de bruit est alors fixé directement à l'intérieur de ce prolongement 22'.

La structure alvéolaire 44 de réduction de bruit, ainsi que son prolongement 44' vers l'avant, sont formés d'une peau interne 46 perméable à l'air, de structure comparable à celle de la peau interne 26 de la paroi 20, et d'une âme alvéolaire 48 interposée entre la peau 46 et le carter de soufflante 22. L'âme alvéolaire 48 présente également une structure comparable à celle de l'âme alvéolaire 30 de la paroi 20. Dans ce cas, la réflexion acoustique et la transmission des efforts sont assurés par le carter de soufflante 22 proprement dit.

Comme on l'a illustré notamment sur les figures 3 et 4, le prolongement 22' du carter de soufflante 22 recouvre avantageusement le bord avant de l'âme alvéolaire 48.

Etant donné que le carter de soufflante 22 est habituellement métallique, la surface extérieure 23 du prolongement vers l'avant 22' peut être usinée afin d'assurer le centrage de la pièce de raccordement 36, comme on l'a illustré sur les figures 3 et 4.

La variante de réalisation illustrée sur la figure 4 se distingue essentiellement de celle de la figure 3 par le fait que la pièce de raccordement 36 comporte dans ce cas une partie avant 36c, qui s'étend radialement vers l'intérieur le long de la face arrière de l'âme alvéolaire 30 de la paroi intérieure 20.

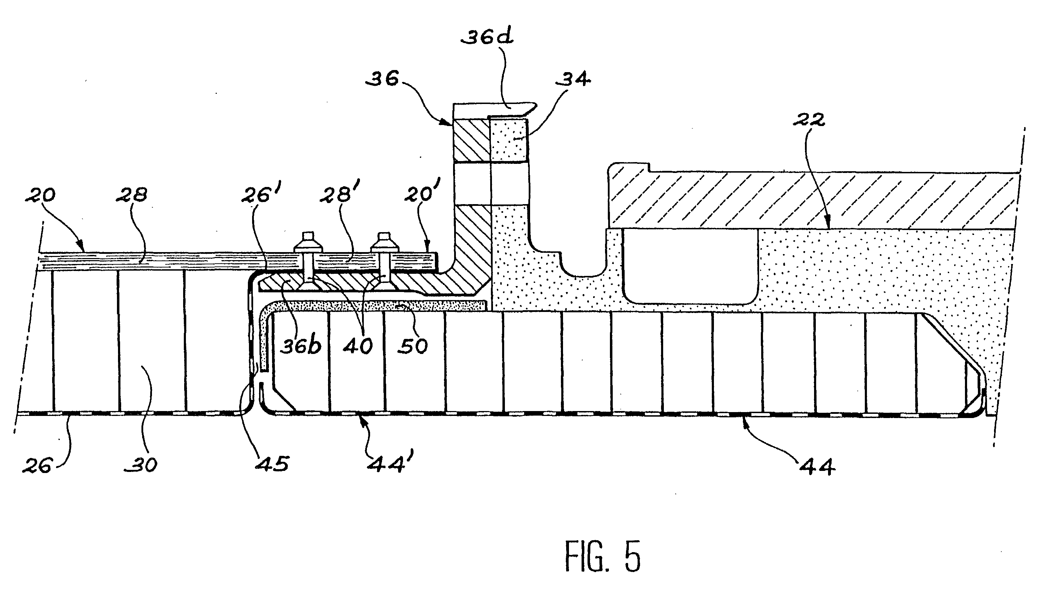

Toujours dans le cadre du premier mode de réalisation de l'invention, la figure 5 représente une autre variante de la première forme de réalisation de la zone de jonction, dans laquelle le prolongement vers l'avant 22' du carter de soufflante 22 est supprimé. Dans ce cas, le prolongement vers l'avant 44' de la structure alvéolaire 44 de réduction de bruit est placé à l'intérieur d'une pièce rapportée 50. Cette pièce rapportée 50 présente une section en forme de L dont une branche entoure le prolongement vers l'avant 44' de la structure alvéolaire 44 et dont l'autre branche recouvre au moins partiellement le bord avant de cette structure. Dans ce cas, la pièce rapportée 50 est fixée sur le prolongement vers l'avant de la structure alvéolaire 44 par des moyens de fixation tels que des éclisses (non représentées).

Dans cette variante de réalisation illustrée sur la figure 5, la pièce de raccordement 36 comporte des parties de centrage et de guidage 36d qui sont placées autour de la bride 34 du carter de soufflante 22, de façon à assurer le centrage de la pièce 36 par rapport à ce carter sur la figure 5. Les parties de centrage et de guidage 36d font partie intégrante de la pièce de raccordement 36.

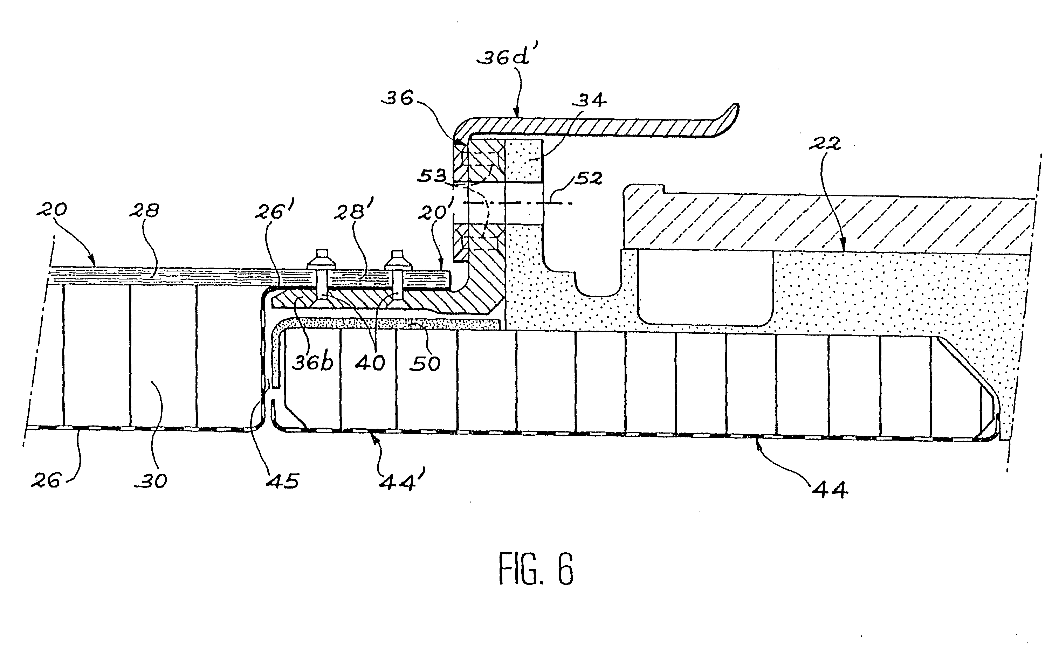

De façon comparable, la figure 6 montre l'adjonction de parties de centrage et guidage 36' sur la pièce de raccordement 36. Ces parties 36' sont fixées sur la pièce 36 par des organes de fixation 53 situés en des emplacements différents de ceux des organes de fixation 52 de ladite pièce 36 sur la bride 34, et notamment en des emplacements décalés radialement par rapport à cette dernière fixation, Les parties de centrage et de guidage 36' s'étendant axialement vers l'arrière autour de la bride 34. Elles sont notamment utilisées durant l'installation ou la dépose de l'entrée d'air, pour éviter l'endommagement éventuel des pièces 50 et 44'.

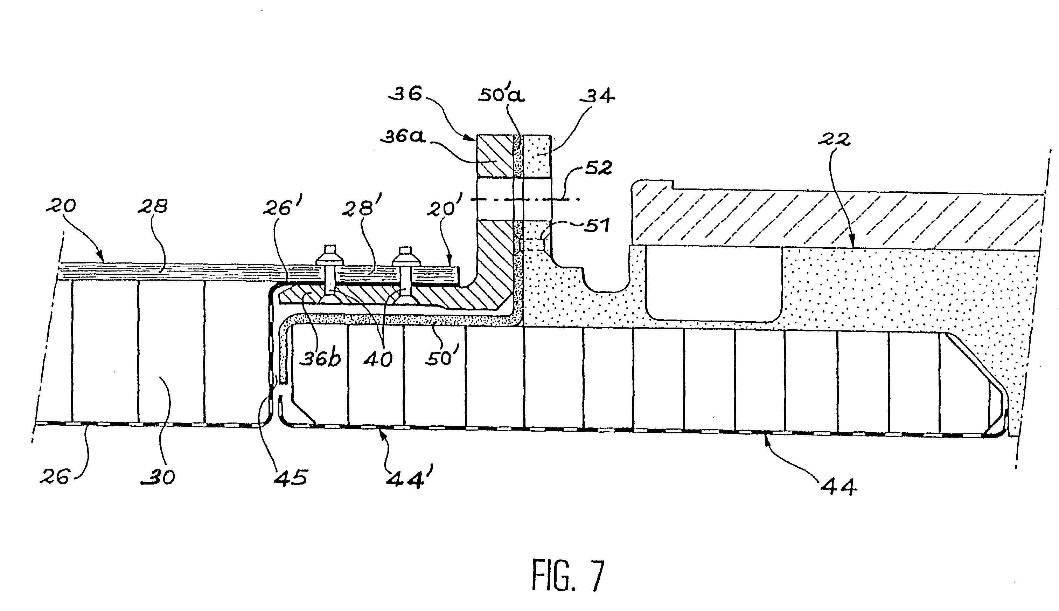

Une autre variante de la première forme de réalisation de la zone de jonction, toujours appliquée au premier mode de réalisation de l'invention, est illustrée sur la figure 7. Comme dans le cas des figures 5 et 6, le prolongement vers l'avant 44' de la structure alvéolaire 44 de réduction de bruit est logé dans une pièce rapportée 50'. Toutefois, la pièce rapportée 50' comporte ici, en plus de la partie à section en forme de L qui entoure le prolongement 44', une partie plane 50'a, fixée entre la bride 34 et la première branche 36a de la pièce de raccordement 36. La fixation est assurée, par exemple, par des rivets ou des vis 51 qui relient la partie plane 50' a à la bride 34, en des emplacements décalés par rapport aux organes de fixation démontables 52 de la branche 36a sur la bride 34. Ainsi, la pièce 50' reste solidaire de la bride moteur 34 lors de la dépose de la structure d'entrée d'air 18, et elle soutient et protège les structures alvéolaires 44 et 44'.

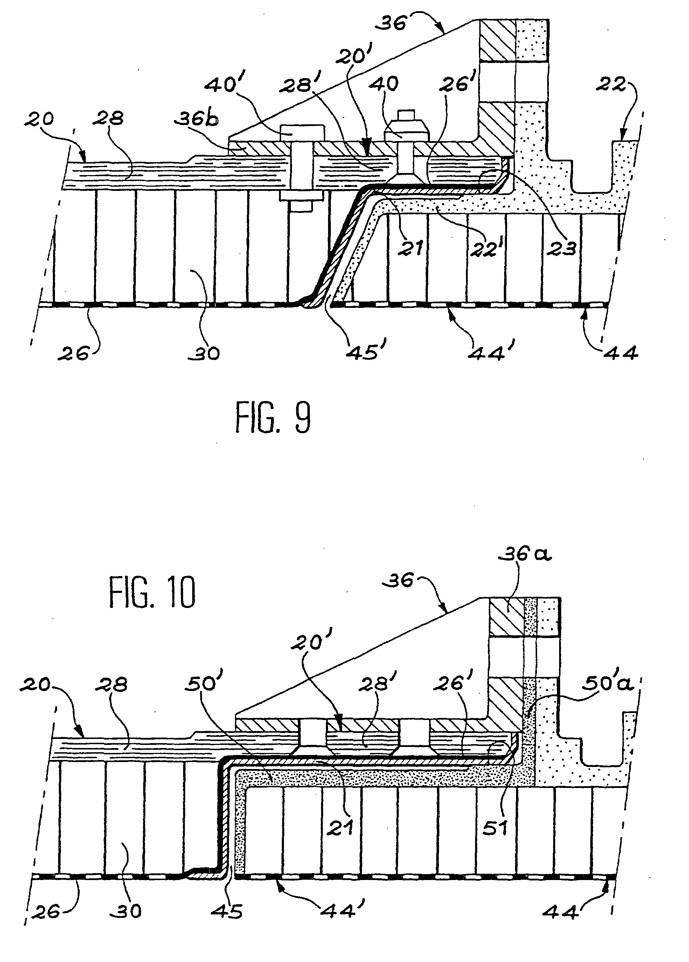

Toujours dans le cas du premier mode de réalisation de l'invention, les figures 8 à 10 représentent différentes variantes d'une deuxième forme de réalisation de la zone de jonction, dans laquelle la deuxième branche 36b de la pièce de raccordement 36 est fixée à l'extérieur de la partie arrière 20' de la paroi intérieure 20. Dans ce cas, une reprise d'usinage est nécessaire sur la surface extérieure de la partie arrière de la paroi 20, avant de réaliser la fixation de la pièce de raccordement 36, à l'aide des organes de fixation 40. Cependant, tous les autres avantages procurés par l'invention demeurent, y compris notamment la présence de structures alvéolaires de réduction de bruit dans la zone de jonction entre la structure d'entrée d'air et le carter de soufflante.

Dans ce cas, une tôle de protection 21 recouvre avantageusement la surface intérieure de la partie arrière 20' de la paroi 20, comme l'illustrent les figures 8 à 10. Cette tôle de protection 21 se prolonge alors sur la face arrière de l'âme alvéolaire 30.

Sur les figures 8 et 9, le prolongement vers l'avant 44' de la structure alvéolaire 44 est monté dans un prolongement vers l'avant 22' du carter de soufflante 22, comme dans le cas des figures 3 et 4. Un usinage 23 effectué sur ce prolongement 22' peut alors être utilisé pour assurer le centrage de la partie arrière 20' de la paroi intérieure 20, comme l'illustrent les figures 8 et 9.

Dans toutes les réalisations illustrées sur les figures 3 à 8, la surface de jonction 45 entre la structure alvéolaire 44 et la partie de la paroi intérieure 20 attenante à la partie arrière 20' est orientée radialement par rapport à l'axe longitudinal du turboréacteur.

Comme on l'a illustré schématiquement sur la figure 9, cette surface de jonction 45' peut aussi être inclinée vers l'arrière, en allant vers l'extérieur du turboréacteur.

La variante de réalisation de la figure 9 se distingue également par le fait que la fixation de la branche 36b de la pièce de raccordement 36 est effectuée en partie par des organes de fixation classiques 40 traversant la partie arrière 20' de la paroi 20 et en partie par des organes de fixation "aveugles" 40' traversant la peau externe 28, en avant de la partie arrière 20'.

Dans la deuxième forme de réalisation de la zone de jonction, il est également possible de remplacer le prolongement vers l'avant du carter de soufflante 22 par une pièce rapportée 50' entourant le prolongement vers l'avant 44' de la structure alvéolaire 44 de réduction de bruit et comportant une partie plane 50'a, fixée entre la bride 34 et la première branche 36a de la pièce de raccordement 36 (figure 10). Dans ce cas, la surface extérieure 51 de la pièce rapportée 50' peut être usinée, afin d'assurer le centrage de la partie arrière 20' de la paroi 20, comme l'illustre également la figure 10.

Dans la deuxième forme de réalisation de la zone de jonction, le prolongement vers l'avant 44' de la structure alvéolaire 44 peut aussi être placé à l'intérieur d'une pièce rapportée 50 fixée directement à ce prolongement, comme on l'a décrit précédemment en se référant aux figures 5 et 6 pour la première forme de réalisation. Le centrage de la pièce de raccordement 36 est alors avantageusement obtenu en équipant la première branche 36a de cette pièce de raccordement de parties de centrage 36d faisant saillie vers l'arrière autour de la bride 34.

Il est à noter que la pièce de raccordement 36 peut être réalisée selon le cas, soit en une seule partie annulaire monobloc, soit en plusieurs parties en arc de cercle, éclissées entre elles ou sur une partie indépendante.

Les figures 11 à 14 illustrant le deuxième mode de réalisation de l'invention, c'est-à-dire le cas où la structure alvéolaire 44' est une pièce distincte de la structure alvéolaire 44.

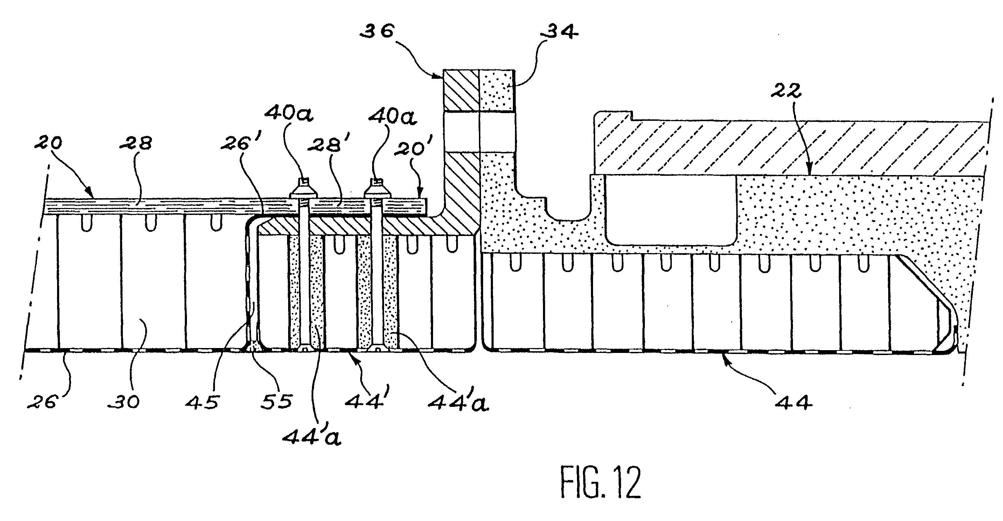

Plus précisément, les figures 11 et 12 représentent des variantes de la première forme de réalisation, selon laquelle la partie arrière 20' de la paroi intérieure 20 entoure la branche 36b de la pièce de raccordement 36.

Dans le cas de la figure 11, la structure alvéolaire 44' est fixée directement, par exemple de façon démontable, sur la branche 36b de la pièce 36. Par ailleurs, des organes de fixation démontables 40 tels que des vis relient la branche 36b à la partie arrière 20' de la paroi intérieure 20.

Dans le cas de la figure 12, les mêmes organes de fixation 40a fixent la structure alvéolaire 44' sur la branche 36b de la pièce 36 et la branche 36b sur la partie arrière 20' de la paroi intérieure 20. Ces organes 40a traversent alors l'empilement de part en part. A cet effet, la structure alvéolaire 44' comporte de préférence au moins une zone 44'a à résistance renforcée, au passage de chaque organe 40a. Cette zone 44'a peut être obtenue par un remplissage des alvéoles correspondantes de la structure 44'.

Dans les variantes de réalisation des figures 11 et 12, des moyens d'étanchéité aérodynamique tels qu'un joint 55 sont interposés entre la paroi intérieure 20 et la structure alvéolaire 44', au niveau de leurs faces intérieures.

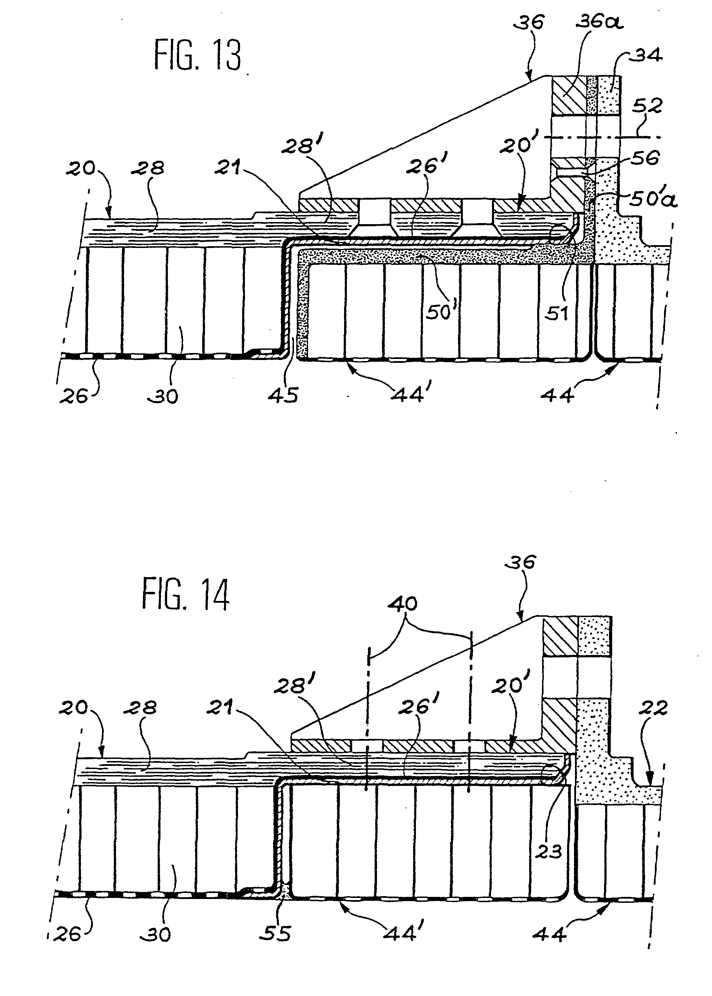

Les figures 13 et 14 illustrent des variantes de la deuxième forme de réalisation, selon laquelle la partie arrière 20' de la paroi intérieure 20 est fixée à l'intérieur de la branche 36b de la pièce de raccordement 36.

Dans le cas de la figure 13, la structure alvéolaire 44' est montée dans une pièce rapportée 50' dont une partie 50'a est fixée entre la bride 34 et la pièce 36, comme décrit précédemment en se référant à la figure 10. Toutefois, dans ce cas la pièce 50' est fixée à la branche 36a de la pièce 36 par des organes de fixation 56 tels que des rivets ou des vis, distincts des organes de fixation 52 de la pièce 36 sur la bride 34. Ainsi, la structure 44' et la pièce 50' restent solidaires de la structure d'entrée d'air, lors du démontage de celle-ci.

Dans le cas de la figure 14, la structure alvéolaire 44' est fixée directement dans la partie arrière 20' de la paroi intérieure 20, par exemple par les organes de fixation 40 qui relient cette partie arrière 20' à la pièce de raccordement 36. On trouve également dans ce cas des moyens d'étanchéité aérodynamique 55 entre la paroi 20 et la structure 44'.

## Revendications

1. Ensemble réducteur de bruit, pour turboréacteur, cet ensemble comprenant une structure d'entrée d'air (18), munie d'une paroi intérieure (20) incluant une peau interne perméable (26), une peau externe imperméable (28) et une âme alvéolaire (30) ; un carter de soufflante (22) pourvu d'une bride extérieure annulaire (34) à son extrémité avant et équipé intérieurement d'une première structure alvéolaire (44) de réduction de bruit ; et une pièce annulaire de raccordement (36) fixée à la bride (34) et à une partie arrière (20') de la paroi intérieure (20) ; **caractérisé par le fait que** la partie arrière (20') de la paroi intérieure (20), à laquelle est fixée la pièce annulaire de raccordement (36), est dépourvue d'âme alvéolaire et située sensiblement dans le prolongement de la peau externe (28), et **par le fait qu'**une deuxième structure alvéolaire (44') de réduction de bruit est rapportée à l'intérieur de la partie arrière (20') de la paroi intérieure (20).

2. Ensemble selon la revendication 1, dans lequel la partie arrière (20') de la paroi intérieure (20) comprend des prolongements vers l'arrière (26',28') de la peau interne (26) et de la peau externe (28), appliqués l'un contre l'autre.

3. Ensemble selon l'une quelconque des revendications 1 et 2, dans lequel la pièce de raccordement (36) présente une section en forme de L, dont les branches (36a,36b) sont fixées respectivement à la bride (34) et à la partie arrière (20') de la paroi intérieure (20).

4. Ensemble selon la revendication 3, dans lequel l'une (36b) des branches de la pièce de raccordement (36) est fixée à l'intérieur de la partie arrière (20') de la paroi intérieure (20).

5. Ensemble selon la revendication 4, dans lequel la pièce de raccordement (36) comporte une partie avant (36c) qui s'étend radialement vers l'intérieur le long d'une face avant de l'âme alvéolaire (30).

6. Ensemble selon la revendication 3, dans lequel l'une (36b) des branches de la pièce de raccordement (36) est fixée à l'extérieur de la partie arrière (20') de la paroi intérieure (20).

7. Ensemble selon l'une quelconque des revendications 1 à 6, dans lequel la deuxième structure alvéolaire (44') de réduction de bruit est constituée par un prolongement vers l'avant de la première structure alvéolaire (44) de réduction de bruit.

8. Ensemble selon l'une quelconque des revendications 1 à 6, dans lequel la deuxième structure alvéolaire (44') de réduction de bruit est séparée de la première structure alvéolaire (44) de réduction de bruit.

9. Ensemble selon la revendication 7, dans lequel le prolongement vers l'avant (44') de la structure alvéolaire (44) est placé à l'intérieur d'un prolongement vers l'avant (22') du carter de soufflante (22) .

10. Ensemble selon les revendications 4 et 9 combinées, dans lequel la pièce de raccordement (36) est centrée sur le prolongement vers l'avant (22') du carter de soufflante (22)

11. Ensemble selon les revendications 6 et 9 combinées, dans lequel la partie arrière (20') de la paroi intérieure (20) est centrée sur le prolongement vers l'avant (22') du carter de soufflante (22).

12. Ensemble selon la revendication 7, dans lequel le prolongement vers l'avant (44') de la structure alvéolaire (44) est placé à l'intérieur d'une pièce rapportée (50), fixée sur ledit prolongement (44').

13. Ensemble selon la revendication 12, dans lequel la pièce de raccordement (36) porte des parties de centrage et de guidage (36d,36d') placées autour de la bride (34).

14. Ensemble selon la revendication 13, dans lequel les parties de centrage et de guidage (36d) font partie intégrante de la pièce de raccordement (36).

15. Ensemble selon la revendication 13, dans lequel les parties de centrage et de guidage (36d') sont fixées sur la pièce de raccordement (36) par des moyens de fixation différents des moyens de fixation de ladite pièce de raccordement sur la bride (34).

16. Ensemble selon l'une quelconque des revendications 7 et 8, dans lequel une pièce rapportée (50'), comportant une partie plane (50'a) fixée entre la bride (34) et la pièce de raccordement (36), entoure la deuxième structure alvéolaire (44') de réduction de bruit.

17. Ensemble selon les revendications 16 et 7 combinées, dans lequel la partie plane (50'a) de la pièce (50') est fixée par les moyens de fixation qui relient la bride (34) à la pièce de raccordement (36).

18. Ensemble selon les revendications 16 et 7 combinées, dans lequel la partie plane (50'a) de la pièce (50') est fixée sur la bride (34) par des moyens de fixation différents des moyens de fixation de la pièce de raccordement (36) sur la bride (34).

19. Ensemble selon les revendications 16 et 8 combinées, dans lequel la partie plane (50'a) de la pièce (50') est fixée sur la pièce de raccordement (36) par des moyens de fixation différents des moyens de fixation de ladite pièce de raccordement sur la bride (34).

20. Ensemble selon la revendication 19, dans lequel la deuxième structure alvéolaire (44') est fixée sur la pièce rapportée (50').

21. Ensemble selon les revendications 16 et 6 combinées, dans lequel la partie arrière (20') de la paroi intérieure (20) est centrée sur la pièce rapportée (50').

22. Ensemble selon les revendications 6 et 8 combinées, dans lequel la deuxième structure alvéolaire (44') est fixée à l'intérieur de la partie arrière (20') de la paroi intérieure (20).

23. Ensemble selon les revendications 4 et 8 combinées, dans lequel la deuxième structure alvéolaire (44') est fixée à l'intérieur de la pièce de raccordement (36).

24. Ensemble selon la revendication 23, dans lequel la deuxième structure alvéolaire (44') comporte au moins une zone (44'a) à résistance renforcée, que traversent des moyens de fixation démontables (40a) reliant ladite deuxième structure alvéolaire à la pièce de raccordement (36) et reliant cette dernière pièce à la partie arrière (20') de la paroi intérieure (20).

25. Ensemble selon l'une quelconque des revendications 22 à 24, dans lequel des moyens d'étanchéité aérodynamique (55) sont interposés entre la paroi intérieure (20) de la structure d'entrée d'air (18) et la deuxième structure alvéolaire (44'), au niveau d'une face intérieure de celle-ci.

26. Ensemble selon l'une quelconque des revendications précédentes, dans lequel la structure alvéolaire (44') de réduction de bruit est séparée de la paroi intérieure (20) attenante à la partie arrière (20') par une surface de jonction (45') inclinée vers l'arrière, en allant vers l'extérieur.

27. Ensemble selon l'une quelconque des revendications précédentes, dans lequel la deuxième structure alvéolaire (44') de réduction de bruit est séparée de la paroi intérieure (20) attenante à la partie arrière (20') par une surface de jonction (45) orientée radialement.

## Claims

1. Noise reducing assembly for turbines, said assembly comprising an air inlet structure (18) provided with an internal wall (20) comprising an internal permeable skin (26), an impermeable external skin (28) and a honeycomb core (30); an air blower housing (22) provided with an external annular flange (34) at the front end and fitted on the inside with a first noise reducing honeycomb structure (44); an annular connecting part (36) fastened to the flange (34) and a rear section (20') of the internal wall (20); **characterized in that** the rear section (20') of the internal wall (20), to which the annular connecting part (36) is fastened is not provided with a honeycomb core and is located more or less in line with the external skin (28), and in which a second noise reducing honeycomb structure (44') is added inside the rear section (20') of the internal wall (20).

2. Assembly according to claim 1, wherein the rear section (20') of the internal wall (20) comprises extensions towards the rear (26', 28') of the internal skin (26) and the external skin (28), that are applied one against the other.

3. Assembly according to either of the claims 1 and 2, wherein the connecting part (36) has an L-shaped cross-section, the arms (36a, 36b) of which are respectively fastened to the flange (34) and to the internal wall (20).

4. Assembly according to claim 3, wherein one (36b) of the arms of the connecting part (36) is fastened inside the rear section (20') of the internal wall (20).

5. Assembly according to claim 4, wherein the connecting part (36) comprises a forward section (36c) that extends radially towards the inside along a forward surface of the honeycomb core (30).

6. Assembly according to claim 3, wherein one (36b) of the arms of the connecting part (36) is fastened to the outside of the rear section (20') of the internal wall (20).

7. Assembly according to any one of the claims 1 to 6, wherein the second noise reducing honeycomb structure (44') consists of a forward extension of the first noise reducing honeycomb structure (44).

8. Assembly according to any one of the claims 1 to 6, wherein the second noise reducing honeycomb structure (44') is separated from the first noise reducing honeycomb structure (44).

9. Assembly according to claim 7, wherein the forward extension (44') of the honeycomb structure (44) is located inside a forward extension (22') of the air blower housing (22).

10. Assembly according to claims 4 and 9 combined, wherein the connecting part (36) is centred on the forward extension (22') of the air blower housing (22).

11. Assembly according to claims 6 and 9 combined, wherein the rear part (20') of the internal wall (20) is centred on the forward extension (22') of the air blower housing (22).

12. Assembly according to claim 7, wherein the forward extension (44') of the honeycomb structure (44) is placed within a joined part (50) fixed to said extension (44').

13. Assembly according to claim 12, wherein the connecting part (36) carries centring and guiding parts (36d, 36d') placed around the flange (34).

14. Assembly according to claim 13, wherein the centring and guiding parts (36d) form an integral part of the connecting part (36).

15. Assembly according to claim 13, wherein the centring and guiding parts (36d') are fixed to the connecting part (36) by fixing means different from the means for fixing said connecting part to the flange (34).

16. Assembly according to one of the claims 7 and 8, wherein a joined part (50') having a planar portion (50'a) fixed between the flange (34) and the connecting part (36) surrounds the second, noise reducing honeycomb structure (44').

17. Assembly according to claims 16 and 7 combined, wherein the planar portion (50'a) of part (50') is fixed by fixing means linking the flange (34) with the connecting part (36).

18. Assembly according to claims 16 and 7 combined, wherein the planar portion (50'a) of part (50') is fixed to the flange (34) by fixing means differing from the means for fixing the connecting part (36) to flange (34).

19. Assembly according to claims 16 and 8 combined, wherein the planar portion (50'a) of part (50') is fixed to the connecting part (36) by fixing means different from the means for fixing said connecting part to flange (34).

20. Assembly according to claim 19, wherein the second honeycomb structure (44') is fixed to the joined part (50').

21. Assembly according to claim 16 and 6 combined, wherein the rear part (20') of the inner wall (20) is centred on the joined part (50').

22. Assembly according to claims 6 and 8 combined, wherein the second honeycomb structure (44') is fixed to the interior of the rear part (20') of inner wall (20).

23. Assembly according to claims 4 and 8 combined, wherein the second honeycomb structure (44') is fixed to the interior of the connecting part (36) .

24. Assembly according to claim 23, wherein the second honeycomb structure (44') has at least one reinforced resistance area (44'a) traversed by dismantlable fixing means (40a) linking said second honeycomb structure to the connecting part (36) and linking said latter part to the rear portion (20') of the inner wall (20).

25. Assembly according to any one of the claims 22 to 24, wherein aerodynamic sealing means (55) are interposed between the inner wall (20) of the air inlet structure (18) and the second honeycomb structure (44') level with the inner face of the latter.

26. Assembly according to any one of the preceding claims, wherein the noise reducing honeycomb structure (44') is separated from the inner wall (20) adjoining the rear portion (20') by a junction surface (45'), which is inclined towards the rear on passing towards the outside.

27. Assembly according to any one of the preceding claims, wherein the second noise reducing honeycomb structure (44') is separated from the inner wall (20) adjoining the rear portion (20') by a radially oriented junction surface (45).

## Patentansprüche

1. Geräuschverringerungseinrichtung für ein Turbotriebwerk, wobei diese Einrichtung eine Lufteingangsstruktur (18) umfaßt, die versehen ist mit einer Innenwand (20), umfassend eine durchlässige Innenschicht (26), eine undurchlässige Außenschicht (28) sowie eine zellenförmige Seele (30); ein Gebläsegehäuse (22), das an seinem Vorderende mit einem ringförmigen Außenflansch (34) versehen ist und innen mit einer ersten zellenförmigen Geräuschverringerungsstruktur (44) ausgestattet ist; sowie ein ringförmiges Anschlußelement (36), das am Flansch (34) und an einem hinteren Bereich (20') der Innenwand (20) befestigt ist; **dadurch gekennzeichnet, daß** der hintere Bereich (20') der Innenwand (20), an dem das ringförmige Anschlußelement (36) befestigt ist, keine zellenförmige Seele aufweist und im wesentlichen in der Verlängerung der Außenschicht (28) angeordnet ist, und daß eine zweite zellenförmige Geräuschverringerungsstruktur (44') an der Innenseite des hinteren Bereichs (20') der Innenwand (20) angebracht ist.

2. Einrichtung nach Anspruch 1, bei der der hintere Bereich (20') der Innenwand (20) Verlängerungen der Innenschicht (26) und der Außenschicht (28) nach hinten (26', 28') umfaßt, die aneinander anliegen.

3. Einrichtung nach einem der Ansprüche 1 und 2, bei der das Anschlußelement (36) einen Querschnitt in Form eines L aufweist, dessen Schenkel (36a, 36b) am Flansch 34 bzw. am hinteren Bereich (20') der Innenwand (20) befestigt sind.

4. Einrichtung nach Anspruch 3, bei der einer (36b) der Schenkel des Anschlußelements (36) an der Innenseite des hinteren Bereich (20') der Innenwand (20) befestigt ist.

5. Einrichtung nach Anspruch 4, bei der das Anschlußelement (36) einen Vorderbereich (36c) aufweist, der sich entlang einer Vorderfläche der zellenförmigen Seele (30) radial nach innen erstreckt.

6. Einrichtung nach Anspruch 3, bei der einer (36b) der Schenkel des Anschlußelements (36) an der Außenseite des hinteren Bereichs (20') der Innenwand (20) befestigt ist.

7. Einrichtung nach einem der Ansprüche 1 bis 6, bei der die zweite zellenförmige Geräuschverringerungsstruktur (44') gebildet ist durch eine Verlängerung der ersten zellenförmigen Geräuschverringerungsstruktur (44) nach vorne.

8. Einrichtung nach einem der Ansprüche 1 bis 6, bei der die zweite zellenförmige Geräuschverringerungsstruktur (44') von der ersten zellenförmigen Geräuschverringerungsstruktur (44) getrennt ist.

9. Einrichtung nach Anspruch 7, bei der die Verlängerung der zellenförmigen Struktur (44) nach vorne (44') innerhalb einer Verlängerung des Gebläsegehäuses (22) nach vorne (22') angeordnet ist.

10. Einrichtung nach den kombinierten Ansprüchen 4 und 9, bei der das Anschlußelement (36) auf der Verlängerung des Gebläsegehäuses (22) nach vorne (22') zentriert ist.

11. Einrichtung nach den kombinierten Ansprüchen 6 und 9, bei der der hintere Bereich (20') der Innenwand (20) auf der Verlängerung des Gebläsegehäuses (22) nach vorne (22') zentriert ist.

12. Einrichtung nach Anspruch 7, bei der die Verlängerung der zellenförmigen Struktur (44) nach vorne (44') innerhalb eines Einsatzes (50) angeordnet ist, der an der Verlängerung (44') befestigt ist.

13. Einrichtung nach Anspruch 12, bei der das Anschlußelement (36) Zentrier- und Führungsbereiche (36d, 36d') trägt, die um den Flansch (34) herum angeordnet sind.

14. Einrichtung nach Anspruch 13, bei der die Zentrier- und Führungsbereiche (36d) ein integrierender Bestandteil des Anschlußelements (36) sind.

15. Einrichtung nach Anspruch 13, bei der die Zentrier- und Führungsbereiche (36d') am Anschlußelement (36) durch Befestigungsmittel befestigt sind, die verschieden sind von den Mitteln zur Befestigung des Anschlußelements am Flansch (34).

16. Einrichtung nach einem der Ansprüche 7 und 8, bei der ein Einsatz (50'), umfassend einen ebenen Bereich (50'a), der zwischen dem Flansch (34) und dem Anschlußelement (36) befestigt ist, die zweite zellenförmige Geräuschverringerungsstruktur (44') umgibt.

17. Einrichtung nach den kombinierten Ansprüchen 16 und 7, bei der der ebene Bereich (50'a) des Einsatzes (50') durch Befestigungsmittel befestigt ist, die den Flansch (34) mit dem Anschlußelement (36) verbinden.

18. Einrichtung nach den kombinierten Ansprüchen 16 und 7, bei der der ebene Bereich (50'a) des Einsatzes (50') am Flansch (34) durch Befestigungsmittel befestigt ist, die verschieden sind von den Mitteln zur Befestigung des Anschlußelements (36) am Flansch (34).

19. Einrichtung nach den kombinierten Ansprüchen 16 und 8, bei der der ebene Bereich (50'a) des Einsatzes (50') am Anschlußelement (36) durch Befestigungsmittel befestigt ist, die verschieden sind von den Mitteln zur Befestigung des Anschlußelements am Flansch (34).

20. Einrichtung nach Anspruch 19, bei der die zweite zellenförmige Struktur (44') am Einsatz (50') befestigt ist.

21. Einrichtung nach den kombinierten Ansprüchen 16 und 6, bei der der hintere Bereich (20') der Innenwand (20) auf dem Einsatz (50') zentriert ist.

22. Einrichtung nach den kombinierten Ansprüchen 6 und 8, bei der die zweite zellenförmige Struktur (44') an der Innenseite des hinteren Bereichs (20') der Innenwand (20) befestigt ist.

23. Einrichtung nach den kombinierten Ansprüchen 4 und 8, bei der die zweite zellenförmige Struktur (44') an der Innenseite des Anschlußelements (36) befestigt ist.

24. Einrichtung nach Anspruch 23, bei der die zweite zellenförmige Struktur (44') wenigstens eine Zone (44'a) mit verstärktem Widerstand umfaßt, welche demontierbare Befestigungsmittel (44a) durchsetzen, die die zweite zellenförmige Struktur mit dem Anschlußelement (36) verbinden und dieses letztgenannte Element mit dem hinteren Bereich (20') der Innenwand (20) verbinden.

25. Einrichtung nach einem der Ansprüche 22 bis 24, bei der Aerodynamik-Dichtigkeitsmittel (55) zwischen die Innenwand (20) der Lufteingangsstruktur (18) und die zweite zellenförmige Struktur (44') eingesetzt sind, und zwar im Bereich einer Innenfläche derselben.

26. Einrichtung nach einem der vorhergehenden Ansprüche, bei der die zellenförmige Geräuschverringerungsstruktur von der an den hinteren Bereich (20') angrenzenden Innenwand (20) durch eine Verbindungsfläche (45') getrennt ist, die nach außen hin nach hinten geneigt ist.

27. Einrichtung nach einem der vorhergehenden Ansprüche, bei der die zweite zellenförmige Geräuschverringerungsstruktur (44') von der an den hinteren Bereich (20') angrenzenden Innenwand (20) durch eine radial orientierte Verbindungsfläche (45) getrennt ist.
